# EUROPÄISCHE PATENTANMELDUNG

(11) **EP 4 585 840 A2**
(43) Veröffentlichungstag der Anmeldung: **16.07.2025**
(21) Anmeldenummer: 24220789.2
(22) Anmeldetag: 17.12.2024
(51) Int. Cl.: F16L 25/01, F16L 9/12, F16L 11/127

(54) **STECKVERBINDER FÜR EIN WASSERSTOFFLEITUNGSSYSTEM VON KRAFTFAHRZEUGEN**

(30) Priorität: 21.12.2023 DE 102023136227
(71) Anmelder: Voss Automotive GmbH, 51688 Wipperfürth (DE)
(72) Erfinder: SERDARIS, Jannis, 51643 Gummersbach (DE); HEINRICHS, Eugen, 51702 Bergneustadt (DE); OBERDÖRFER, Alexander, 42477 Radevormwald (DE); HESS, Jochem-Andreas, 51688 Wipperfürth (DE); WASCHKEWITZ, Markus, 51702 Bergneustadt (DE)
(74) Vertreter: Dr. Solf & Zapf Patent- und Rechtsanwalts PartG mbB

(57) **Zusammenfassung**

Die vorliegende Erfindung betrifft einen Steckverbinder (1), insbesondere für ein Wasserstoffleitungssystem mit zumindest einer eine elektrisch leitfähige Innenschicht (6) aufweisenden Fluidleitung (4). Der Steckverbinder (1) weist einen Grundkörper (8) mit zumindest einem ersten Anschlussende (10) und zumindest einem fluidisch mit dem ersten Anschlussende (10) verbundenen zweiten Anschlussende (12) auf. Insbesondere ist das zweite Anschlussende (12) als rohrförmiger Anschlusszapfen (42) ausgebildet, wobei der Anschlusszapfen (42) an einer Stirnseite (44) zumindest einen radialelastischen Kontaktarm (46) angeformt hat. Vorzugsweise ist in einer Stecköffnung (17) eines Muffenabschnitts (14) ein Rohransatz (26) des Grundkörpers (8) derart ausgebildet, dass zwischen dem Rohransatz (26) und einer inneren Umfangsfläche der Stecköffnung (17) ein Aufnahmespalt (28) zur Aufnahme eines Gegensteckverbinders (2) ausgebildet ist und der Rohransatz (26) einen Fluidkanal (30) aufweist, welcher fluidisch mit zumindest dem zweiten Anschlussende (12) des Grundkörpers (8) verbunden ist. Weiterhin betrifft die Erfindung eine konfektionierte Medienleitung, welche einen derartigen Steckverbinder (1) und eine mit dem Steckverbinder (1) verbundene, eine elektrisch leitfähige Innenschicht (6) aufweisende Fluidleitung (4) aufweist.

## Beschreibung

Die Erfindung betrifft einen Steckverbinder, insbesondere für ein Wasserstoffleitungssystem von Kraftfahrzeugen. Das Wasserstoffleitungssystem umfasst zumindest eine Fluidleitung mit einer elektrisch leitfähigen Innenschicht. Der Steckverbinder weist einen Grundkörper mit zumindest einem ersten Anschlussende und zumindest einem fluidisch mit dem ersten Anschlussende verbundenen, zweiten Anschlussende auf.

Die Erfindung betrifft des Weiteren eine Ausführung des vorgenannten Steckverbinders, wobei das erste Anschlussende des Grundkörpers einen Muffenabschnitt mit einem inneren Aufnahmekanal aufweist. In eine Montagerichtung weisend ist in den Aufnahmekanal des Muffenabschnitts ein Klammerkäfig einsteckbar und formschlüssig mittels eines Lagerelementes axial zur Montagerichtung lösbar gehalten. Dabei ist eine Stecköffnung des Klammerkäfigs koaxial zum Aufnahmekanal angeordnet. Es ist vorgesehen, dass radial zur Stecköffnung elastisch aufweitbare Haltearme in einem unverformten Ruhezustand in die Stecköffnung des Klammerkäfigs hineinragen. Die Haltearme sind dabei Teil einer senkrecht zur Montagerichtung in den Klammerkäfig einsteckbaren Halteklammer.

Weiterhin betrifft die Erfindung eine konfektionierte Wasserstoffleitung mit einer Fluidleitung mit einer elektrisch leitfähigen Innenschicht zur Leitung von Wasserstoff und einem mit der Fluidleitung verbundenen Steckverbinder der vorgenannten Art.

Bei der Leitung von Wasserstoffen in Kraftfahrzeugen sind die Leitungssystemkomponenten, wie die Steckverbinder und die Fluidleitungen, von im Vergleich zu anderen Kraftfahrzeugfluidsystemen relativ hohen Betriebsdrücken, beispielsweise von 21 bar, ausgesetzt. Des Weiteren ist es für viele Medien, insbesondere Wasserstoff, besonders vorteilhaft für die Betriebssicherheit, wenn die Leitungssystemkomponenten elektrische Spannungen bzw. elektrostatische Ladungen ableiten können, wodurch eine Funkenbildung und damit eine Explosionsgefahr vermieden wird. Zudem wird von Leitungssystemkomponenten, insbesondere den Steckverbindern, eine möglichst aufwandsarme Montierbarkeit bei geringem Bauraum und eine hohe Montagesicherheit gefordert.

Aus der WO 2023/148189 A1 ist ein Steckverbinder bekannt, welcher zur Arretierung eines Gegensteckverbinders eine radial zu einem Durchgangskanal des Grundkörpers des Steckverbinders bewegliche Halteklammer aufweist. Die Halteklammer ist in einem in dem Durchgangskanal angeordneten Klammerkäfig radial zum Durchgangskanal selbsteinziehend ausgebildet, so dass die Halteklammer beim Einführen des Gegensteckverbinders in eine Montagerichtung in den Steckverbinder automatisiert von einer Einführstellung in eine Blockierstellung überführt wird. Insbesondere weist dieser Steckverbinder einen geringen Montageaufwand und eine hohe Montagesicherheit bei gleichzeitig geringem Bauraumbedarf auf. Der aus der WO 2023/148189 A1 bekannte Steckverbinder sieht es vor, dass ein Außenumfang des in den Steckverbinder eingeführten und in dem Steckverbinder arretierten Gegensteckverbinders mittels einer Umfangsdichtung gegen eine Innenwandung des Durchgangskanals abgedichtet wird, wobei die Umfangsdichtung zwischen einer Stirnfläche eines Klammerkäfigs und einer Stufenfläche des Grundkörpers eingekammert ist. Es hat sich herausgestellt, dass es bei dieser Dichtungsanordnung bei Betriebsdrücken, wie sie insbesondere in Wasserstoffleitungen auftreten, beispielsweise 21 bar, zu Leckagen kommen kann.

Aus der EP 1 310 721 A2 ist ein Steckverbinder bekannt, welcher mittels eines metallischen Einlegers dazu in der Lage ist, elektrische Spannungen abzuleiten. Dieser Einleger weist Anlagearme auf, welche sich an einem Innenumfang eines in den Steckverbinder eingeführten Gegensteckverbinders anlegen und dadurch eine elektrisch leitfähige Kontaktierung zum Gegensteckverbinder herstellen. Um eine Dichtigkeit zwischen dem Gegensteckverbinder und dem Steckverbinder herzustellen, ist vorgesehen, dass ein Dichtungspaket einen Außenumfang des Gegensteckverbinders gegen einen Innenumfang des Steckverbinders abdichtet. Auch wenn durch den metallischen Einleger die Betriebssicherheit erhöht wird, besteht ein Verbesserungspotenzial der Dichtigkeit bei hohen Betriebsdrücken, des Weiteren erhöht der metallische Einleger die Komplexität des Steckverbinders und bildet eine mögliche Fehlerquelle.

Der Erfindung liegt die Aufgabe zugrunde, einen Steckverbinder und eine konfektionierte Fluidleitung mit einem Steckverbinder bereitzustellen, welche die aus dem Stand der Technik bekannten Nachteile überwindet, insbesondere verbesserte Dichtungseigenschaften und/oder verbesserte Sicherheitseigenschaften aufweist.

Die Aufgabe wird erfindungsgemäß durch die Merkmale der Ansprüche 1, 5 und 17 gelöst.

Der Steckverbinder gemäß dem Anspruch 5 löst die der Erfindung zugrundeliegende Aufgabe dadurch, dass in der Stecköffnung des Muffenabschnitts ein gegen die Montagerichtung weisender Rohransatz des Grundkörpers derart ausgebildet ist, dass zwischen dem Rohransatz und einer inneren Umfangsfläche der Stecköffnung ein Aufnahmespalt zur Aufnahme eines Gegensteckverbinders ausgebildet ist und der Rohransatz einen Fluidkanal aufweist, welcher fluidisch mit zumindest einem zweiten Anschlussende des Grundkörpers verbunden ist. Dadurch, dass sich der Rohransatz in einem Zustand mit eingesteckten Gegensteckverbinder in einen inneren Umfang des Gegensteckverbinders erstreckt, wird eine umfangsgemäße Dichtfläche des Gegensteckverbinders zum Steckverbinder von einem Außenumfang des in den Steckverbinder eingeführten und in dem Steckverbinder arretierten Gegensteckverbinders auf den Innenumfang des Gegensteckverbinders verlagert, wodurch die umfangsgemäße Dichtfläche verringert wird. Vorteilhaft wirkt dadurch ein Betriebsdruck auf eine geringere Dichtfläche, so dass die resultierende, auf die Dichtfläche wirkende Kraft verringert ist. Ein weiterer Vorteil wird erreicht, indem durch die verringerte Dichtfläche auch geringere Einsteckkräfte zum Einführen des Gegensteckverbinders in die Montagerichtung weisend in die Stecköffnung des Klammerkäfigs bzw. in den Aufnahmespalt zwischen Rohransatz und der Stecköffnung notwendig sind. Zweckmäßig ermöglicht die Reduzierung der Einsteckkräfte auch die Anordnung von mehreren axial zur Stecköffnung hintereinander angeordneten Dichtungen auf einem Außenumfang des Rohransatzes unter Wahrung geringer Einsteckkräfte.

Ein weiterer Vorteil des Rohransatzes, insbesondere gegenüber den aus dem Stand der Technik bekannten Steckverbindern, ist, dass der Rohransatz gegen die Montagerichtung weisend durch ein rohrförmiges Werkzeug entformt werden kann. Hierdurch entsteht eine äußere Dichtfläche ohne Trenngrate, wie sie häufig durch zwei Formwerkzeughälften bei einem Herstellungsprozess entstehen. Dies führt zu einer verbesserten Dichtigkeit und einer verbesserten Rundheit im Bereich der Dichtflächen.

Zur Herstellung des Steckverbinders und zum Einführen des Gegensteckverbinders in die Montagerichtung in den Aufnahmespalt hat es sich als besonders vorteilhaft erwiesen, dass gemäß einer Variante des Steckverbinders der Rohransatz gegen die Montagerichtung weisend aus dem Muffenabschnitt herausragt.

Vorzugsweise weist der Rohransatz einen Lagerabschnitt und einen Dichtungsabschnitt auf. Insbesondere weist der Dichtungsabschnitt relativ zum Lagerabschnitt einen geringeren Außendurchmesser auf. Der Lagerabschnitt schließt sich dabei vorzugsweise in Montagerichtung weisend dem Dichtungsabschnitt an. Weiterhin kann vorgesehen sein, dass in dem Dichtungsabschnitt auf einer radial zum Fluidkanal nach außen weisenden Mantelfläche des Rohransatzes ein Dichtungspaket angeordnet ist. Es kann dabei vorgesehen sein, dass sich der Dichtungsabschnitt gemäß einer speziellen Variante des Steckverbinders bis zu einem gegen die Montagerichtung weisenden freien Ende des Rohransatzes erstreckt.

Zweckmäßig kann vorgesehen sein, dass das Dichtungspaket aus einer oder mehreren Umfangsdichtungen, insbesondere O-Ringen, ausgebildet ist. Gemäß einer besonders bevorzugten Ausführungsform weist das Dichtungspaket zwei den Dichtungsabschnitt umfangsgemäß umgreifende Umfangsdichtungen, insbesondere O-Ringe, und einen zwischen den Umfangsdichtungen angeordneten und den Dichtungsabschnitt umfangsgemäß umgreifenden Abstandshalter auf. Insbesondere wird durch die, im Vergleich zu einer zum Gegensteckverbinder außenliegenden Dichtung, wie aus dem Stand der Technik bekannt, verringerte Dichtfläche, auch bei zwei oder mehr Umfangsdichtungen die aufzubringende Einsteckkraft zum Aufschieben des Gegensteckverbinders auf den Rohransatz in der Stecköffnung bzw. zum Einführen des Gegensteckverbinders in den Aufnahmespalt geringgehalten. Als vorteilhaft hat sich herausgestellt, wenn eine Umfangsdichtung des Dichtungspakets an einem Anschlag, insbesondere einem Anschlag an einem Übergang zwischen dem Lagerabschnitt und dem Dichtungsabschnitt, anliegt.

Gemäß einer vorteilhaften Ausbildung ist vorgesehen, dass der Dichtungsabschnitt mindestens zwei Stufen aufweist. Eine erste Stufe des Dichtungsabschnitts ist vorzugsweise benachbart zu dem Lagerabschnitt ausgebildet. Eine zweite Stufe des Dichtungsabschnitts ist vorzugsweise benachbart zu dem gegen die Montagerichtung weisenden Ende des Rohransatzes ausgebildet. Vorzugsweise ist vorgesehen, dass die erste Stufe relativ zu dem Lagerabschnitt einen geringeren Außendurchmesser und/oder relativ zu der zweiten Stufe einen größeren Außendurchmesser aufweist. Zweckmäßig kann vorgesehen sein, dass auf der ersten Stufe des Dichtungsabschnitts eine erste Umfangsdichtung eines Dichtungspakets, beispielsweise ein erster O-Ring, und auf der zweiten Stufe des Dichtungsabschnitts eine zweite Umfangsdichtung des Dichtungspakets, beispielsweise ein zweiter O-Ring, angeordnet ist. Vorzugsweise liegt die erste Umfangsdichtung an einem Anschlag an einem Übergang zwischen dem Lagerabschnitt und der ersten Stufe an.

Vorteilhafterweise ist vorgesehen, dass der Abstandshalter einen ersten Anlageabschnitt und einen zweiten Anlageabschnitt aufweist. Es ist insbesondere vorgesehen, dass der Abstandshalter mit einem Anschlagabschnitt, vorzugsweise einem Anschlagabschnitt des zweiten Anlageabschnitts, an einem Abstandshalteranschlag des Dichtungsabschnitts anliegt. Durch eine derartige Wechselwirkung zwischen dem Anschlagabschnitt und dem Abstandshalteranschlag kann ein Abstand zwischen dem Abstandshalter und dem Lagerabschnitt eingestellt werden. Eine erste Umfangsdichtung kann so gewählt sein, dass ihre axiale Erstreckung kleiner oder gleich dem Abstand zwischen dem Abstandshalter und dem Lagerabschnitt ist. Hierdurch kann eine Kompression der ersten Umfangsdichtung vermieden werden und die erforderlichen Einsteckkräfte können reduziert werden. Insbesondere ist ein Innendurchmesser des ersten Anlageabschnitts relativ größer als ein Innendurchmesser des zweiten Anlageabschnitts. Vorzugsweise liegt der Abstandshalter mit dem ersten Anlageabschnitt zumindest teilweise an der ersten Stufe des Dichtungsabschnitts und/oder mit dem zweiten Anlageabschnitt zumindest teilweise an der zweiten Stufe des Dichtungsabschnitts an.

Zur Anordnung und Sicherung des Dichtungspakets auf der Mantelfläche des Rohransatzes ist vorzugsweise ein ringförmiges Halteelement auf dem Dichtungsabschnitt zumindest teilweise angeordnet. Dadurch, dass das Halteelement vorzugsweise auf der dem Lagerabschnitt gegenüberliegenden Seite des Dichtungspakets angeordnet ist, wird das Dichtungspaket zweckmäßig von dem ringförmigen Halteelement und dem im Außendurchmesser relativ zum Dichtungsabschnitt vergrößerten Lagerabschnitt eingekammert.

Insbesondere ist vorgesehen, dass das Halteelement auf einer Stufe, beispielsweise einer dritten Stufe, des Dichtungsabschnitts angeordnet ist. Die dritte Stufe weist einen Außendurchmesser auf, der vorzugsweise relativ zu einem Außendurchmesser der ersten Stufe und/oder relativ zu einem Außendurchmesser der zweiten Stufe geringer ist, bevorzugt der geringste Außendurchmesser des Rohransatzes ist. Um ein zu tiefes Anbringen des Halteelements auf dem Dichtungsabschnitt zu verhindern, weist der Dichtungsabschnitt einen Halteelementanschlag auf. An dem Halteelementanschlag liegt in einem verbundenen Zustand das Halteelement an.

Gemäß einer vorteilhaften Ausführungsform weist das Halteelement mindestens einen radial abstehenden Halteelementkontaktarm auf. Insbesondere ist der Halteelementkontaktarm radialelastisch ausgebildet. Zweckmäßig kann das Halteelement eine Mehrzahl von radial abstehenden Halteelementkontaktarmen aufweisen, wobei vorzugsweise die radial abstehenden Halteelementkontaktarme gleich ausgebildet sind und/oder gleichverteilt über den Umfang des Halteelements angeordnet sind.

Das ringförmige Halteelement kann insbesondere an den Rohreinsatz angeformt sein, wobei das Dichtungspaket derart ausgebildet ist, dass es zur Anordnung auf der Mantelfläche des Dichtungsabschnitts radialelastisch aufgeweitet über das ringförmige Halteelement in einen Bereich zwischen dem Halteelement und dem Lagerabschnitt geführt und aufgrund einer Rückverformung an der Mantelfläche des Dichtungsabschnitts vollumfänglich anliegend angeordnet werden kann.

Zweckmäßig ist es für die Herstellung des Steckverbinders und die Anordnung des Dichtungspakets vorteilhaft, wenn das ringförmige Halteelement als ein von dem Grundkörper unabhängiges Element aus dem gleichen oder einem unterschiedlichen Werkstoff des Grundkörpers ausgebildet ist. Vorzugsweise ist ein derartig unabhängiges, ringförmiges Halteelement stoffschlüssig mit dem Rohransatz verbunden. Als besonders vorteilhaft hat sich dabei eine Schweißverbindung oder eine Verklebung des Halteelements mit dem Rohransatz erwiesen. Ein Beispiel für eine Schweißverbindung ist eine Laserschweißverbindung. Alternativ ist vorgesehen, dass das Halteelement über eine formschlüssige und/oder eine kraftformschlüssige Verbindung mit dem Rohransatz verbunden ist, beispielsweise über eine Pressverbindung oder über eine Rastverbindung.

Gemäß einer weiteren Ausführungsform ist das ringförmige Halteelement kappenartig ausgebildet und an einer gegen die Montagerichtung weisenden Frontseite des freien Endes des Rohransatzes und der Mantelfläche des Dichtungsabschnitts anliegend angeordnet, insbesondere angeklebt oder angeschweißt.

Es hat sich zudem für die Betriebssicherheit als besonders vorteilhaft erwiesen, dass das ringförmige Halteelement aus einem elektrisch leitfähigen Material, beispielsweise einem elektrisch leitfähigen Kunststoff, ausgebildet ist. Elektrische Spannungen bzw. elektrostatische Ladungen im Gegensteckverbinder können dadurch effektiv in den Grundkörper abgeleitet werden. Der elektrisch leitfähige Kunststoff ermöglicht insbesondere eine korrosionsresistente elektrische Kontaktierung. Als bevorzugter elektrisch leitfähiger Kunststoff hat sich insbesondere mit Glasfasern und/oder Kohlefasern verstärkter Kunststoff, insbesondere PA612, erwiesen. Ein Kohlefaseranteil von 20 % hat sich dabei als besonders vorteilhaft herausgestellt.

Zudem wird die Betriebssicherheit in einer besonders bevorzugten Variante dadurch erhöht, dass der gesamte Grundkörper aus einem elektrisch leitfähigen Material ausgebildet ist. Insbesondere ein elektrisch leitfähiger Kunststoff ermöglicht vorteilhaft eine korrosionsresistente elektrische Kontaktierung. Vorteilhaft hat sich als elektrisch leitfähiger Kunststoff insbesondere ein mit Glasfasern und/oder Kohlefasern verstärkter Kunststoff, insbesondere PA612, als besonders vorteilhaft auch als vorteilhaftes Material für den Grundkörper herausgestellt. Insbesondere ein Kohlefaseranteil von 20 % ist besonders geeignet. Der Rohransatz ist als Teil des Grundkörpers dadurch ebenfalls elektrisch leitfähig, so dass der Rohransatz gemäß dieser Ausführung elektrische Spannungen bzw. elektrostatische Ladungen unmittelbar aus dem Gegensteckverbinder in den Grundkörper ableiten kann.

Sofern mindestens an dem Halteelement ein Halteelementkontaktarm vorgesehen ist, hat es sich als vorteilhaft herausgestellt, wenn insbesondere vorgesehen ist, dass der Halteelementkontaktarm aus einem elektrisch leitendem Material hergestellt ist, vorzugsweise materialeinheitlich, bevorzugt einstückig, mit dem Halteelement ausgebildet ist. Ist der Halteelementkontaktarm aus elektrisch leitendem Material hergestellt, so kann der Halteelementkontaktarm eine elektrische Verbindung zwischen einem Inneren eines Gegensteckverbinders und dem Steckverbinder herstellen.

Die Herstellung des Steckverbinders kann des Weiteren dadurch verbessert werden, dass der gesamte Grundkörper materialeinheitlich, insbesondere monolithisch einstückig, vorzugsweise als Spritzgussteil, hergestellt ist. Besonders vorteilhaft in Kombination mit der Ausbildung des Grundkörpers aus einem elektrisch leitfähigen Material wird Übergangswiderständen vorgebeugt.

Es liegt im Rahmen der Erfindung, dass gemäß einer vorteilhaften Variante des Steckverbinders das erste Anschlussende analog zu dem zweiten Anschlussende gemäß einer der vorgenannten erfindungsgemäßen und vorteilhaften Ausführung des Steckverbinders ebenfalls mit einem Rohransatz zur Verbindung mit einem weiteren Gegensteckverbinder ausgebildet ist.

Des Weiteren wird die der Erfindung zugrundeliegende Aufgabe durch einen Steckverbinder mit den Merkmalen des Anspruchs 1 dadurch gelöst, dass zumindest das zweite Anschlussende des Grundkörpers als rohrförmiger Anschlusszapfen ausgebildet ist, wobei der Anschlusszapfen an einer gegen eine Anschlussrichtung weisenden Stirnseite zumindest einen radialelastischen Kontaktarm angeformt hat, welcher sich derart gegen die Anschlussrichtung weisend zu jeweils einem freien Ende erstreckt, dass die Fluidleitung in die Anschlussrichtung weisend unter radialelastischer Verformung des Kontaktarms auf den Kontaktarm bis zur Anlage an der Stirnseite des Anschlusszapfens aufgeschoben und mit dem Anschlusszapfen verbunden werden kann, wobei mittels des Kontaktarms eine elektrische Spannung aus der elektrisch leitfähigen Innenschicht der Fluidleitung ableitbar ist. Vorteilhaft erhöht diese erfindungsgemäße Variante die Betriebssicherheit, indem elektrische Spannungen bzw. elektrostatische Ladungen aus der Fluidleitung effektiv abgeleitet werden können. Dadurch, dass der Kontaktarm an dem Anschlusszapfen angeformt ist, wird die Anzahl an Bauteilen geringgehalten, so dass die Anzahl der möglichen Fehlerquellen begrenzt wird. Vorteilhaft ist weiterhin, dass der Kontaktarm durch eine radial nach außen weisende Rückstellkraft gegen die elastische Verformung, welche die Fluidleitung beim Aufschieben auf den Kontaktarm ausübt, zuverlässig einen konstanten Anlagekontakt zwischen dem Kontaktarm und der elektrisch leitfähigen Innenschicht der Fluidleitung gewährleistet, so dass elektrische Spannungen bzw. elektrostatische Ladungen aus der Fluidleitung abgeleitet werden können.

Insbesondere kann vorgesehen sein, dass dieser Steckverbinder die Merkmale der vorausgegangenen erfindungsgemäßen und vorteilhaften Ausführungen des erstgenannten Steckverbinders, insbesondere das Halteelement, den Klammerkäfig, den Rohreinsatz etc., aufweist. Insbesondere eine Kombination beider erfindungsgemäßen Varianten des Steckverbinders stellt in synergetischer Zusammenwirkung des ersten erfindungsgemäßen Anschlussendes des Grundkörpers zur Aufnahme des Gegensteckverbinders und des zweiten erfindungsgemäßen Anschlussendes des Grundkörpers zur Verbindung mit der Fluidleitung eine besonders vorteilhafte Ausführung zur Lösung der der Erfindung zugrunde liegenden Aufgabe bereit und zeichnet sich insbesondere durch eine vorteilhafte Dichtigkeit auch bei Betriebsdrücken von beispielsweise 21 bar und eine erhöhte Betriebssicherheit aus.

Vorteilhaft kann vorgesehen sein, dass der Anschlusszapfen auf einer äußeren Umfangsfläche einen Montageabschnitt zur stoffschlüssigen Verbindung mit einer Montagehülse aufweist. Hierbei hat es sich für die Betriebssicherheit, Lebensdauer und Dichtigkeit, insbesondere bei Betriebsdrücken von beispielsweise 21 bar, als vorteilhaft herausgestellt, dass der Montageabschnitt gemäß einer Variante des Steckverbinders als ein Schweißabschnitt zum Verschweißen mit einer als Schweißbuchse ausgebildeten Montagehülse ausgebildet ist.

Die Montagehülse dient dabei zweckmäßig als eine Montagehilfe, indem die Montagehülse sowohl den Montageabschnitt des Anschlusszapfens als auch die Fluidleitung vollumfänglich umgreift und dadurch eine große verschweißbare Fläche für den Montageabschnitt und die Fluidleitung bereitstellt. Insbesondere ist die Fluidleitung mittels der Montagehülse stoffschlüssig mit dem Anschlusszapfen verbunden. Vorteilhaft erübrigt sich mittels der Montagehülse die Notwendigkeit, die Stirnseite des Anschlusszapfens mit einer Stirnseite der Fluidleitung zu verschweißen. Des Weiteren kann die Montagehülse derart ausgebildet sein, dass sie eine stützende Funktion, insbesondere im Verbindungsbereich der Fluidleitung zu dem Anschlusszapfen, bereitstellt.

Es hat sich für den konstanten Anlagekontakt und die elektrisch leitfähige Innenschicht der Fluidleitung als vorteilhaft erwiesen, dass gemäß einer bevorzugten Variante des Steckverbinders an der Stirnseite des Anschlusszapfens zumindest zwei, bevorzugt zumindest vier, insbesondere zumindest sechs, vorzugsweise acht insbesondere umfangsgemäß gleichmäßig an der Stirnseite verteilte Kontaktarme angeformt sind. Insbesondere um die elektrische Spannungen bzw. elektrostatische Ladungen aus der Fluidleitung abzuleiten, wird dadurch der konstante elektrisch leitende Kontakt gewährleistet.

Insbesondere können die zumindest zwei Kontaktarme eine zentrierende Wirkung für die Fluidleitung relativ zu dem Anschlusszapfen aufweisen, so dass die Montage der Fluidleitung an dem Anschlusszapfen erleichtert wird. Vorzugsweise wird die zentrierende Wirkung mit zumindest vier, insbesondere zumindest sechs, vorzugsweise acht Kontaktarmen verbessert.

Es liegt im Rahmen der Erfindung, dass gemäß einer vorteilhaften Variante des Steckverbinders das erste Anschlussende analog zu dem zweiten Anschlussende gemäß einer der vorgenannten erfindungsgemäßen und vorteilhaften Ausführungen des zweitgenannten Steckverbinders ebenfalls mit einem Anschlusszapfen und zumindest einem Kontaktarm ausgebildet ist. Insbesondere können mittels eines Steckverbinders mit zwei als Anschlusszapfen ausgebildeten Anschlussenden Fluidleitungen mit unterschiedlichen Außendurchmessern fluidisch verbunden werden.

Zudem wird die Betriebssicherheit in einer besonders bevorzugten Variante dadurch erhöht, dass der gesamte Grundkörper aus einem elektrisch leitfähigen Material, insbesondere ein elektrisch leitfähiger Kunststoff, ausgebildet ist. Dies ermöglicht auch eine besonders einfache Ableitung von elektrischen Ladungen aus der Fluidleitung. Der elektrisch leitfähige Kunststoff hat gegenüber den aus dem Stand der Technik bekannten metallischen Kontakten den Vorteil, dass der Kunststoff resistenter gegenüber Korrosion ist und damit dauerhaft leitfähig bleibt.

Als vorteilhafter elektrisch leitfähiger Kunststoff hat sich auch für den Grundkörper ein mit Glasfasern und/oder Kohlefasern verstärkter Kunststoff, insbesondere PA612, erwiesen. Ein Kohlefaseranteil von 20 % hat sich dabei als besonders vorteilhaft herausgestellt. Der zumindest eine Kontaktarm und der Anschlusszapfen sind als Teil des Grundkörpers dadurch ebenfalls elektrisch leitfähig, so dass der Kontaktarm gemäß dieser Ausführung elektrische Spannungen bzw. elektrostatische Ladungen unmittelbar aus der Fluidleitung in den Grundkörper ableiten kann.

Die Herstellung und Betriebssicherheit des Steckverbinders kann des Weiteren dadurch verbessert werden, dass der gesamte Grundkörper materialeinheitlich, insbesondere monolithisch einstückig, vorzugsweise als Spritzgussteil, hergestellt ist. Besonders vorteilhaft in Kombination mit der Ausbildung des Grundkörpers aus einem elektrisch leitfähigen Material wird Übergangswiderständen vorgebeugt.

Die der Erfindung zugrundeliegende Aufgabe wird des Weiteren durch eine konfektionierte Medienleitung, insbesondere Wasserstoffleitung, mit den Merkmalen des Anspruchs 17 gelöst. Diese konfektionierte Wasserstoffleitung weist einen Steckverbinder und eine derart mit dem Steckverbinder verbundene, eine elektrisch leitfähige Innenschicht aufweisende Fluidleitung auf, dass ein Leitungskanal der Fluidleitung fluidisch mit dem zweiten Anschlussende verbunden ist.

Der Steckverbinder dieser konfektionierten Medienleitung, insbesondere Wasserstoffleitung, ist für ein Wasserstoffleitungssystem mit einer eine elektrisch leitfähige Innenschicht aufweisenden Fluidleitung geeignet. Der Steckverbinder weist einen Grundkörper mit zumindest einem ersten Anschlussende und zumindest einem fluidisch mit dem ersten Anschlussende verbundenen zweiten Anschlussende auf. Des Weiteren ist vorgesehen, dass zumindest das zweite Anschlussende des Grundkörpers als rohrförmiger Anschlusszapfen ausgebildet ist. Der Anschlusszapfen hat an einer gegen eine Anschlussrichtung weisenden Stirnseite zumindest einen radialelastischen Kontaktarm angeformt, welcher sich derart gegen die Anschlussrichtung weisend zu einem freien Ende erstreckt, dass die Fluidleitung in die Anschlussrichtung weisend unter radialelastischer Verformung des Kontaktarms auf den Kontaktarm bis zur Anlage an der Stirnseite des Anschlusszapfens aufgeschoben und mit dem Anschlusszapfen verbunden werden kann. Der Kontaktarm ist dabei derart ausgebildet, dass mittels der Kontaktarme eine elektrische Spannung aus der elektrisch leitfähigen Innenschicht der Fluidleitung ableitbar ist.

Erfindungsgemäß sieht es die konfektionierte Wasserstoffleitung vor, dass die Fluidleitung mit einem Endabschnitt in die Anschlussrichtung weisend unter radialelastischer Verformung des zumindest einen Kontaktarms auf den Kontaktarm bis zur Anlage an der Stirnseite des Anschlusszapfens aufgeschoben und stoffschlüssig mit dem Anschlusszapfen verbunden ist.

Der in der konfektionierten Wasserstoffleitung verwendete Steckverbinder kann in besonders vorteilhafter Art durch die Merkmale der vorausgegangenen erfindungsgemäßen und vorteilhaften Ausführungen des erstgenannten und/oder zweitgenannten erfindungsgemäßen Steckverbinders, insbesondere das Halteelement, den Klammerkäfig, den Rohreinsatz etc., ergänzt werden. Insbesondere stellen sich die zu den jeweiligen Merkmalen beschriebenen Vorteile ebenfalls bei der konfektionierten Wasserstoffleitung ein.

Gemäß einer Variante der konfektionierten Wasserstoffleitung, insbesondere der Fluidleitung, ist vorgesehen, dass die Fluidleitung eine äußere Trägerschicht aus vorzugsweise PA612 aufweist.

Eine weitere Variante der konfektionierten Wasserstoffleitung sieht vor, dass der Anschlusszapfen des Steckverbinders die auf der äußeren Umfangsfläche den Montageabschnitt, vorzugsweise den Schweißabschnitt, zur stoffschlüssigen Verbindung, insbesondere einem Verschweißen, mit einer, besonders bevorzugt als Schweißbuchse ausgebildeten, Montagehülse aufweist. Dabei ist vorteilhaft vorgesehen, dass die Montagehülse sowohl den Montageabschnitt des Anschlusszapfens als auch den Endabschnitt der Fluidleitung vollumfänglich umgreift und stoffschlüssig mit dem Montageabschnitt und der Fluidleitung, insbesondere der äußeren Trägerschicht der Fluidleitung, stoffschlüssig verbunden, insbesondere verschweißt ist.

Die Montagehülse stellt zur stoffschlüssigen Verbindung der Fluidleitung an den Anschlusszapfen eine gegenüber der Kontaktfläche zwischen der Stirnseite des Anschlusszapfens und einer zu dem Anschlusszapfen weisenden Stirnseite der Fluidleitung größere verschweißbare Fläche bereit, so dass die Fluidleitung sicher mit dem Anschlusszapfen stoffschlüssig verbunden werden kann.

Damit die Montagehülse besser an dem Anschlusszapfen und der Fluidleitung anliegt und/oder unterschiedliche Durchmesser zwischen dem Anschlusszapfen und der Fluidleitung, welche verkanten können, verhindert werden, ist es gemäß einer besonderen Ausführungsform vorgesehen, dass der Anschlusszapfen zumindest im Montageabschnitt einen Durchmesser aufweist, welcher dem Außendurchmesser der Fluidleitung entspricht.

Für die Betriebssicherheit der konfektionierten Wasserstoffleitung kann vorgesehen sein, dass die Fluidleitung eine, die elektrisch leitfähige Innenschicht umgebende, Sperrschicht aufweist. Die Sperrschicht ist vorzugsweise als eine gegenüber Wasserstoff undurchlässige und/oder resistente Sperrschicht ausgebildet. Alternativ oder ergänzend kann die Sperrschicht auch als eine elektrisch isolierende Sperrschicht ausgebildet sein. Vorzugsweise ist die Sperrschicht von der äußeren Trägerschicht der Fluidleitung umgeben. Vorteilhaft ist dadurch die Sperrschicht von der Verbindungsfunktion, insbesondere einer Klebefunktion oder einer Schweißfunktion, entkoppelt, da die stoffschlüssige Verbindung der Fluidleitung mit dem Anschlusszapfen vorzugsweise mittels der Trägerschicht bereitgestellt werden kann. Die Sperrschicht kann dadurch auch aus einem Material ausgebildet sein, welches beispielsweise nicht schweißbar oder gegenüber einem bevorzugten Klebstoff nicht resistent ist.

Für die elektrisch leitfähige Innenschicht der Fluidleitung der konfektionierten Wasserstoffleitung hat es sich als besonders vorteilhaft erwiesen, dass die elektrisch leitfähige Innenschicht der Fluidleitung zumindest teilweise mit Kohlenstoffnanoröhren ausgebildet ist.

Gemäß einer Ausführung des Steckverbinders mit zwei oder mehr Kontaktarmen hat sich für den konstanten Anlagekontakt zwischen den Kontaktarmen und der elektrisch leitfähigen Innenschicht der Fluidleitung als vorteilhaft erwiesen, dass gemäß einer bevorzugten Variante der konfektionierten Wasserstoffleitung die freien Enden der Kontaktarme auf einer Kreisbahn angeordnet sind, wobei diese Kreisbahn ein Übermaß zu dem Leitungskanal der Fluidleitung, zumindest in dem Endabschnitt der Fluidleitung, aufweist. Durch das Übermaß wird sichergestellt, dass die Fluidleitung beim Aufschieben auf die Kontaktarme die Kontaktarme radialelastisch nach innen verformt, so dass die aus der elastischen Verformung resultierende Rückstellkraft einen konstanten Anlagekontakt zwischen den Kontaktarmen und der elektrisch leitfähigen Innenschicht der Fluidleitung gewährleistet. Zweckmäßig wird dadurch sichergestellt, dass die elektrischen Spannungen bzw. elektrostatischen Ladungen aus der Fluidleitung in den Grundkörper abgeleitet werden können. Gemäß einer Weiterentwicklung dieser Variante weist die Kreisbahn, auf welcher die freien Enden der Kontaktarme angeordnet sind, ein Übermaß von 20 % zu dem Leitungskanal der Fluidleitung, zumindest in dem Endabschnitt der Fluidleitung, auf.

Weitere vorteilhafte Ausgestaltungen der Erfindung ergeben sich aus der folgenden Figurenbeschreibung und den abhängigen Unteransprüchen.

Es zeigen:
- Fig. 1: eine Explosionsansicht einer Variante eines Steckverbinders mit einer anzuschließenden Fluidleitung und einem anzuschließenden Gegensteckverbinder,
- Fig. 2: eine perspektivische Ansicht eines Grundkörpers des Steckverbinders gemäß Fig. 1,
- Fig. 3: eine Schnittansicht entlang eines inneren Aufnahmekanals des Grundkörpers gemäß Fig. 2,
- Fig. 4: eine perspektivische Ansicht eines Klammerkäfigs des Steckverbinders gemäß Fig. 1,
- Fig. 5: eine perspektivische Ansicht einer Halteklammer des Steckverbinders gemäß Fig. 1,
- Fig. 6: eine Schnittansicht einer Variante einer konfektionierten Wasserstoffleitung entlang des Aufnahmekanals des Grundkörpers, mit einem Steckverbinder gemäß Fig. 1 in einem mit einem Gegensteckverbinder verbundenen Zustand,
- Fig. 7: eine Schnittansicht eines Grundkörpers mit einem Steckverbinder gemäß einer weiteren Variante entlang eines Aufnahmekanals eines Grundkörpers in einem mit einem Gegensteckverbinder verbundenen Zustand und
- Fig. 8: eine abgebrochene Schnittansicht eines Grundkörpers gemäß Fig. 7 entlang eines inneren Aufnahmekanals.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

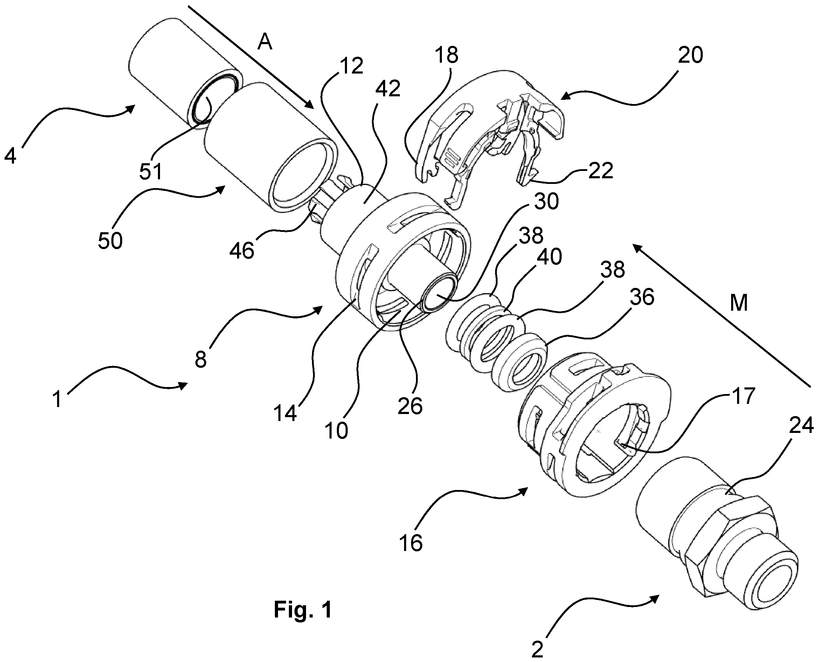

In den Fig. 1, 6 und 7 ist ein Steckverbinder 1 für eine Medienleitung, insbesondere für ein Wasserstoffleitungssystem, mit zumindest einer eine elektrisch leitfähige Innenschicht 6 aufweisenden Fluidleitung 4 dargestellt. Der Steckverbinder 1 ist zum Verbinden von einem Gegensteckverbinder 2 ausgebildet. Weiterhin weist der Steckverbinder 1 einen Grundkörper 8 mit zumindest einem ersten Anschlussende 10 und zumindest einem fluidisch mit dem ersten Anschlussende 10 verbundenen zweiten Anschlussende 12 auf.

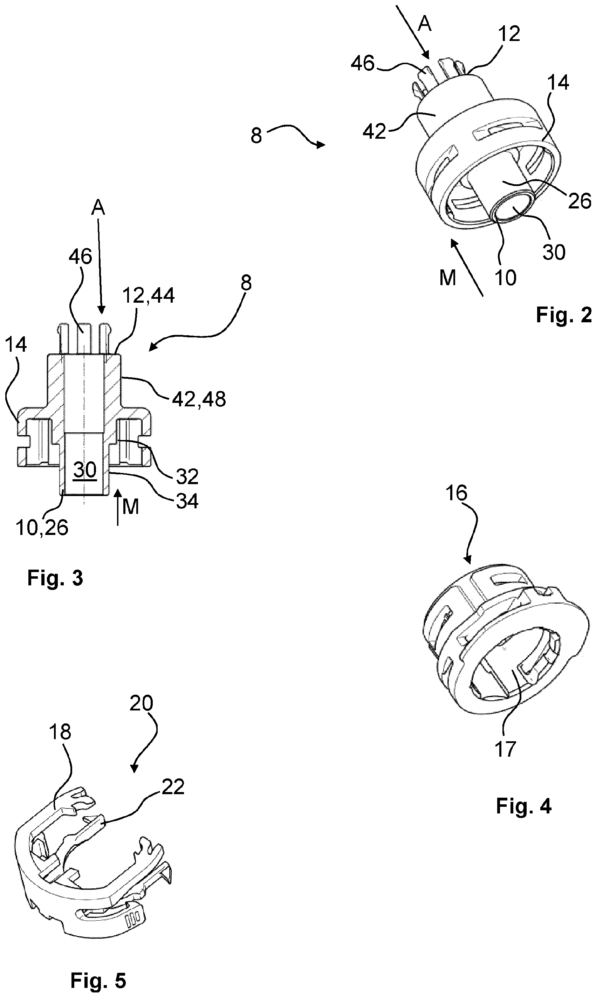

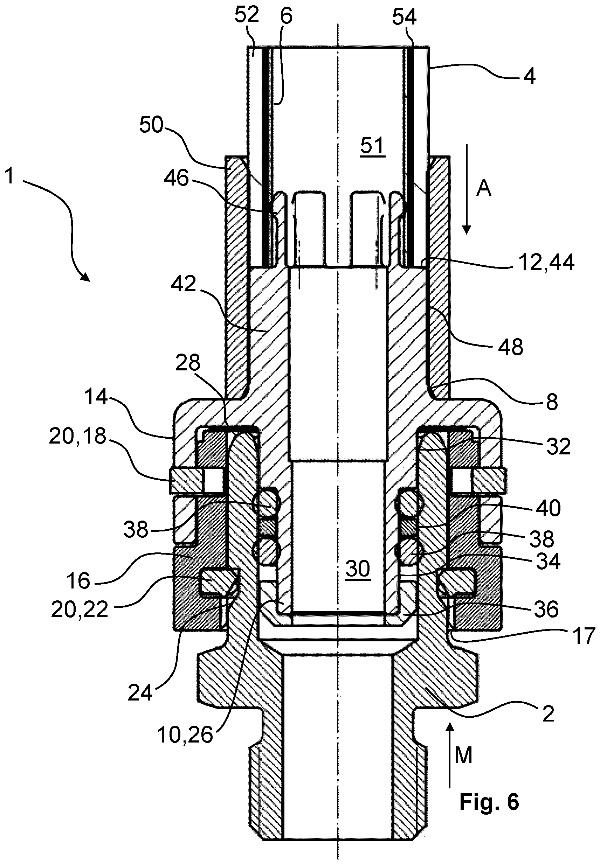

Wie in den Fig. 2, 3 und 8 dargestellt ist, weist zumindest das erstes Anschlussende 10 einen Muffenabschnitt 14 mit einem inneren Aufnahmekanal auf. Dabei ist vorgesehen, dass, wie in Fig. 6 dargestellt, in eine Montagerichtung M weisend in den Aufnahmekanal des Muffenabschnitts 14 ein, exemplarisch in Fig. 4 dargestellter, Klammerkäfig 16 einsteckbar und formschlüssig mittels eines Lagerelements 18 axial zur Montagerichtung M lösbar gehalten ist. Das Lagerelement 18 ist vorzugsweise radial zum Aufnahmekanal elastisch ausgebildet. Es ist vorgesehen, dass eine Stecköffnung 17 des Klammerkäfigs 16 koaxial zum Aufnahmekanal angeordnet ist. Der Klammerkäfig 16 entspricht insbesondere einem aus der WO 2023/148189 A1 bekannten Klammerkäfig 16, das Lagerelement 18 zur Arretierung des Klammerkäfigs 16 kann dabei unmittelbar an dem Klammerkäfig 16 selbst angeformt sein oder in Form eines weiteren Bauteils bereitgestellt werden.

Es ist vorgesehen, dass radial zur Stecköffnung 17 elastisch aufweitbare Haltearme 22 einer senkrecht zur Montagerichtung M in den Klammerkäfig 16 einsteckbaren Halteklammer 20 in einem unverformten Ruhezustand in die Stecköffnung 17 des Klammerkäfigs 16 hineinragen. Die Haltearme 22 sind dabei zur Arretierung des in den Muffenabschnitt 14 einsteckbaren Gegensteckverbinders 2 ausgebildet. Zweckmäßig kann vorgesehen sein, dass das Lagerelement 18 als ein Lagerarm der Halteklammer 20, wie in Fig. 5 dargestellt, ausgebildet ist.

Vorzugsweise sind die Haltearme 22, wie aus der WO 2023/148189 A1 bekannt, parallel zueinander verlaufend ausgebildet. Die Halteklammer 20 ist dabei vorzugsweise radial zur Stecköffnung 17 zwischen einer Einführstellung, in welcher die Haltearme 22 aus dem Ruhezustand in einen Spannungszustand radial aufweitbar sind, und einer Blockierstellung, in welcher die Haltearme 22 gegen eine Aufweitung aus dem Ruhezustand in einen aufgeweiteten Spannungszustand blockiert sind, verschiebbar ausgebildet.

Die Halteklammer 20 entspricht insbesondere einer aus der WO 2023/148189 A1 bekannten Halteklammer 20. Vorzugsweise sind die Halteklammer 20 und der Klammerkäfig 16 derart korrespondierend zueinander ausgebildet, dass die Halteklammer 20 sowohl den Klammerkäfig 16 in dem Aufnahmekanal des Muffenabschnitts 14 als auch den Gegensteckverbinder 2 in der Durchgangsöffnung des Klammerkäfigs 16 fixiert.

Zweckmäßig wird die Anzahl der Elemente des Steckverbinders 1 durch die Kombination der Sicherung des Klammerkäfigs 16 in dem Muffenabschnitt 14 und des Gegensteckverbinders 2 in der Stecköffnung 17 des Klammerkäfigs 16 verringert. Zudem kann die Halteklammer 20 derart ausgebildet sein, dass in dem Ruhezustand der Lagerarme 18 die Halteklammer 20 nicht in die Blockierstellung überführt werden kann. Vorteilhaft wird dadurch eine Vormontagesicherung zur Verfügung gestellt, welche verhindert, dass bereits vor dem Einstecken des Gegensteckverbinders 2 in die Stecköffnung 17 die Halteklammer 20 in die Blockierstellung verschoben und ein Einstecken des Gegensteckverbinders 2 verhindert wird.

Eine weitere vorteilhafte Ausführung sieht vor, dass, während die Haltearme 22 im Spannungszustand sind und die Halteklammer 20 in der Einführstellung ist, die Halteklammer 20 gegen die Verschiebung von der Einführstellung in die Blockierstellung blockiert ist. Bei dieser Ausführung wird vorteilhaft verhindert, dass die Halteklammer 20 in die Blockierstellung verschoben wird, bevor der Gegensteckverbinder 2 vollständig eingesteckt ist. Insbesondere werden Fehlmontagen unterbunden und eine zusätzliche Montagekontrolle zur Verfügung gestellt.

Der Gegensteckverbinder 2 ist, wie in Fig. 1 dargestellt, vorzugsweise als ein männliches Steckerteil mit einem Ringbund oder einer umlaufenden Haltenut 24 ausgebildet. Die Haltearme 22 der Halteklammer 20 sind dabei derart ausgebildet, dass, wenn der Gegensteckverbinder 2 in Montagerichtung M eingesteckt wird, der Gegensteckverbinder 2 die Haltearme 22 radial zur Stecköffnung 17 aufweitet. Wenn der Gegensteckverbinder 2 vollständig in die Stecköffnung 17 eingeführt ist, ordnen sich die Haltearme 22 durch eine elastische Rückverformung in Montagerichtung M betrachtet vor dem Ringbund oder in der Haltenut 24 an, so dass der Gegensteckverbinder 2 zumindest gegen eine Bewegung gegen die Montagerichtung M in der Stecköffnung 17 arretiert ist.

Das Zusammenwirken der Halteklammer 20 mit dem Klammerkäfig 16 und dem Gegensteckverbinder 2 und deren zueinander korrespondierende Ausführungen entsprechen insbesondere den aus der WO 2023/148189 A1 bekannten Ausführungen. Vorzugsweise ist die Halteklammer 20 derart ausgebildet, dass sie sich selbstständig radial zu der Stecköffnung 17 in den Klammerkäfig 16 einzieht, wenn der Gegensteckverbinder 2 vollständig in die Stecköffnung 17 eingesteckt ist.

Erfindungsgemäß ist vorgesehen, dass in der Stecköffnung 17 des Muffenabschnitts 14 ein gegen die Montagerichtung M weisender Rohransatz 26 des Grundkörper 8 derart ausgebildet ist, dass zwischen dem Rohransatz 26 und einer inneren Umfangsfläche der Stecköffnung 17 ein Aufnahmespalt 28 zur Aufnahme des Gegensteckverbinders 2 ausgebildet ist. In Fig. 6 ist dargestellt, wie der Gegensteckverbinder 2, insbesondere ein Steckerschaft des Gegensteckverbinders 2, auf dem Rohransatz 26 und in dem Aufnahmespalt 28 angeordnet ist.

Der Rohransatz 26 ist vorzugsweise materialeinheitlich mit dem übrigen Grundkörper 8. Vorzugsweise umfasst der Grundkörper 8 den Rohransatz 26 und ist als monolithisch einstückiges Element, insbesondere in einem Spritzgussverfahren, hergestellt.

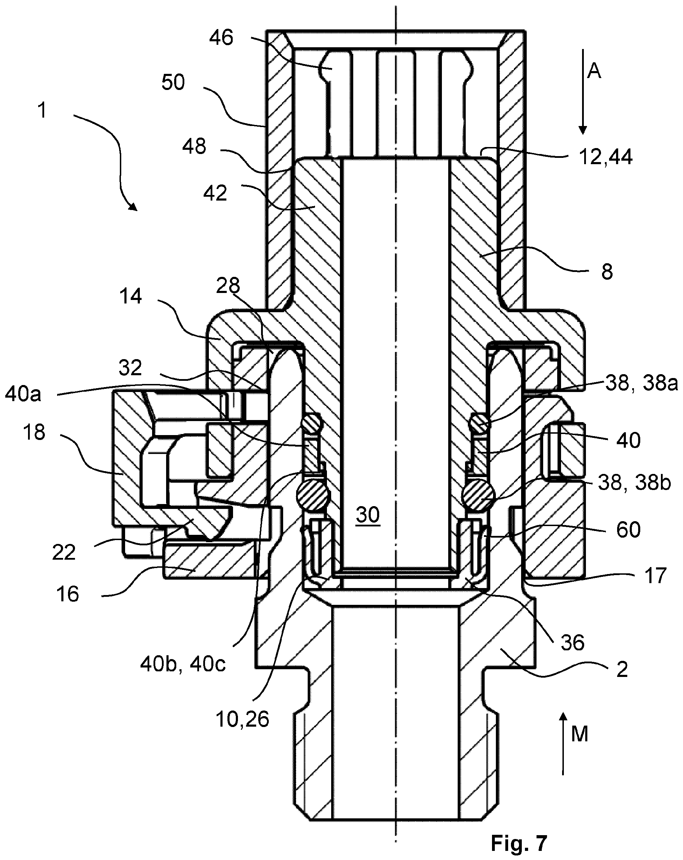

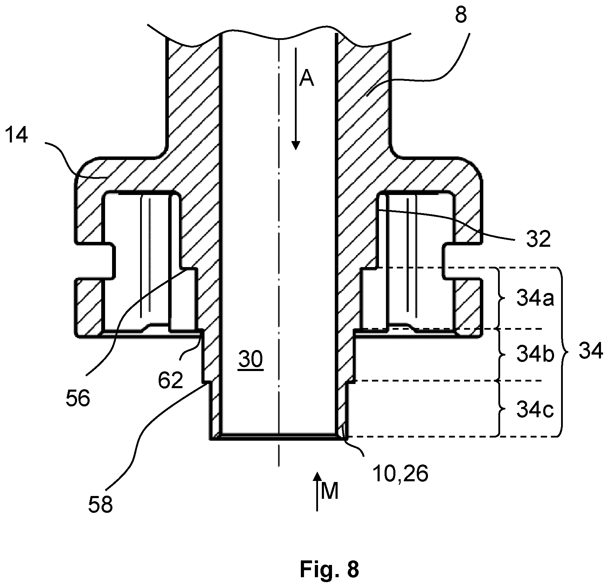

Erfindungsgemäß weist der Rohransatz 26, wie in den Fig. 2, 3 und 6 sowie in den Figuren 7 und 8 gemäß einem weiteren Ausführungsbeispiel dargestellt, einen Fluidkanal 30 auf, welcher, wie in Fig. 6 dargestellt, fluidisch mit zumindest dem zweiten Anschlussende12 verbunden ist.

In den Fig. 1, 2, 3 und 6 ist weiterhin eine vorteilhafte Variante des Grundkörpers 8 dargestellt, gemäß welcher der Rohransatz 26 gegen die Montagerichtung M weisend aus dem Muffenabschnitt 14 herausragt. Auch gemäß der Variante, die in den Fig. 7 und 8 dargestellt ist, ragt der Rohransatz 26 gegen die Montagerichtung M weisend aus dem Muffenabschnitt 14 heraus.

Insbesondere aus den Fig. 3 und 6 geht eine bevorzugte Variante des Grundkörpers 8 hervor, gemäß welcher der Rohransatz 26 einen Lagerabschnitt 32 und einen Dichtungsabschnitt 34 aufweist. Insbesondere weist dabei der Dichtungsabschnitt 34 relativ zum Lagerabschnitt 32 einen geringeren Außendurchmesser auf. Weiterhin schließt sich vorzugsweise der Lagerabschnitt 32 in Montagerichtung M weisend dem Dichtungsabschnitt 34 an. Zur Verbesserung der Dichtungseigenschaften des Steckverbinders 1 hat es sich zudem als vorteilhaft herausgestellt, dass in dem Dichtungsabschnitt 34 auf einer radial zum Fluidkanal 30 nach außen weisenden Mantelfläche ein Dichtungspaket, wie in Fig. 6 dargestellt, angeordnet ist.

In den Fig. 3 und 6 ist des Weiteren dargestellt, dass gemäß einer vorteilhaften Ausführungsvariante sich der Dichtungsabschnitt 34 bis zu einem gegen die Montagerichtung M weisenden freien Ende des Rohransatzes erstreckt.

Eine weiterentwickelte Ausführungsform des Rohransatzes 26 sieht es vor, dass zumindest teilweise auf dem Dichtungsabschnitt 34 auf der dem Lagerabschnitt 32 gegenüberliegenden Seite des Dichtungspakets ein ringförmiges Halteelement 36 angeordnet ist. In den Fig. 1 und 6 ist eine besondere Variante des ringförmigen Halteelements 36 dargestellt, wonach das Halteelement 36 kappenartig ausgebildet ist und zweckmäßig an einer gegen die Montagerichtung M weisenden Frontseite des an dem in die Montagerichtung M weisenden freien Ende des Rohransatzes 26 und der Mantelfläche des Dichtungsabschnitts 34 anliegend angeordnet ist.

Das ringförmige Halteelement 36 ist gemäß einer Ausführungsform des Steckverbinders 1 stoffschlüssig mit dem Rohransatz 26 verbunden. Als besonders geeignet hat sich ein Verkleben oder ein Verschweißen des ringförmigen Halteelements 36 mit dem Rohransatz 26 herausgestellt. Eine alternative Variante sieht vor, dass das Halteelement 36 mit dem Rohransatz 26 verrastet oder auf dem Rohransatz 26 gepresst angeordnet ist.

Gemäß einer weiteren Ausführung des ringförmigen Halteelementes 36 ist das ringförmige Halteelement aus einem elektrisch leitfähigen Material, insbesondere einem elektrisch leitfähigen Kunststoff, ausgebildet. Als vorteilhafter elektrisch leitfähiger Kunststoff hat sich insbesondere ein mit Glasfasern und/oder Kohlefasern verstärkter Kunststoff, insbesondere PA612, erwiesen. Ein Kohlefaseranteil von 20 % hat sich dabei als besonders vorteilhaft herausgestellt.

Zur Abdichtung des Steckverbinders 1 gegenüber dem Gegensteckverbinder 2 weist das Dichtungspaket vorzugsweise zwei den Dichtungsabschnitt 34 umfangsgemäß umgreifende Umfangsdichtungen 38, insbesondere O-Ringe, auf. In einer weiterentwickelten Ausführung ist zwischen den Umfangsdichtungen 38 ein Abstandshalter 40 angeordnet, welcher den Dichtungsabschnitt 34 umfangsgemäß umgreift. Das Dichtungspaket mit zwei Umfangsdichtungen 38 und einem Abstandshalter 40 ist insbesondere in den Fig. 1 und 6 dargestellt.

In den Fig. 1 und 6 ist eine weitere Ausführung des Steckverbinders 1 für eine Medienleitung, insbesondere für ein Wasserstoffleitungssystem, mit zumindest einer eine elektrisch leitfähige Innenschicht 6 aufweisenden Fluidleitung 4 dargestellt. Dieser Steckverbinder 1 weist einen Grundkörper 8 mit zumindest einem ersten Anschlussende 10 und zumindest einem fluidisch mit dem ersten Anschlussende verbundenen zweiten Anschlussende 12 auf.

Erfindungsgemäß ist bei dieser zweiten Ausführung des Steckverbinders 1 vorgesehen, dass, wie insbesondere in den Fig. 2, 3, 6 und 7 dargestellt, zumindest das zweite Anschlussende 12 des Grundkörpers 8 als rohrförmiger Anschlusszapfen 42 ausgebildet ist. Der Anschlusszapfen 42 hat an einer gegen eine Anschlussrichtung A weisenden Stirnseite 44 zumindest einen radialelastischen Kontaktarm 46 angeformt. Der Kontaktarm 46 erstreckt sich dabei derart gegen die Anschlussrichtung weisend zu einem freien Ende, dass die Fluidleitung 4 in die Anschlussrichtung A weisend unter radialelastischer Verformung des Kontaktarms 46 auf den Kontaktarm 46 bis zur Anlage an die Stirnseite 44 des Anschlusszapfens 42 aufgeschoben und mit dem Anschlusszapfen 42 verbunden werden kann. In Fig. 6 ist der aufgeschobene und mit dem Anschlusszapfen 42 verbundene Zustand der Fluidleitung 4 dargestellt. Erfindungsgemäß ist vorgesehen, dass mittels des Kontaktarms 46 eine elektrische Spannung aus der elektrisch leitfähigen Innenschicht 6 der Fluidleitung 4 ableitbar ist.

Entsprechend Fig. 6 weist der Anschlusszapfen 42 auf einer äußeren Umfangsfläche einen Montageabschnitt 48 zur stoffschlüssigen Verbindung mit einer Montagehülse 50 auf. In der in Fig. 6 dargestellten bevorzugten Variante des Steckverbinders 1 ist der Montageabschnitt 48 als ein Schweißabschnitt 48 zum Verschweißen mit der Montagehülse 50 ausgebildet, wobei die Montagehülse 50 ebenfalls als eine Schweißbuchse 50 ausgebildet ist.

Insbesondere sind an der Stirnseite 44 des Anschlusszapfens 42 zumindest zwei, bevorzugt zumindest vier, insbesondere, wie in Fig. 1 und 2 dargestellt, zumindest sechs Kontaktarme 46 umfangsgemäß gleichmäßig an der Stirnseite 44 verteilt angeformt. Gemäß einer nicht dargestellten Variante kann der Anschlusszapfen 42 acht Kontaktarme 46 an der Stirnseite 44 angeformt aufweisen.

Vorteilhaft weist die in den Fig. 1 und 6 dargestellte zweite Ausführung des Steckverbinders 1, wie in den Fig. 1 und 6 dargestellt, die Merkmale der vorgenannten ersten Ausführung des Steckverbinders 1 auf, so dass die Merkmale der jeweiligen Ausführungen im synergetischen Zusammenwirken einen Steckverbinder mit einer hohen Betriebssicherheit und einer hohen Dichtigkeit bereitstellen. Wie in den Fig. 1 und 6 dargestellt, sind dabei die Merkmale der erstgenannten Ausführung des Steckverbinders 1 und die Merkmale des zweitgenannten Steckverbinders 1 miteinander kompatibel.

Insbesondere liegt eine besonders bevorzugte Ausführungsvariante des Steckverbinders 1 darin, dass der Grundkörper 8 aus einem elektrisch leitfähigen Material ausgebildet ist. Des Weiteren kann es sich vorzugsweise bei diesem elektrisch leitfähigen Material um einen elektrisch leitfähigen Kunststoff, insbesondere einem mit Glas- und/oder Kohlefasern verstärkten Kunststoff, handeln. Vorzugsweise ist der Grundkörper 8 aus einem mit Kohlefasern verstärkten Kunststoff mit einem Kohlefaseranteil von insbesondere 20 %, ausgebildet. Diese Ausführung des Grundkörpers 8 aus einem elektrisch leitfähigen Material hat sich insbesondere für die erstgenannte und die zweitgenannte Ausführung des Steckverbinders 1, ganz besonders vorteilhaft für eine Kombination der erstgenannten und der zweitgenannten Ausführung des Steckverbinders 1, wie sie in den Fig. 1 und 6 dargestellt ist, bewährt.

Ebenfalls vorteilhaft kann bei der erstgenannten und der zweitgenannten Ausführung des Steckverbinders 1, ganz besonders vorteilhaft für eine Kombination der erstgenannten und der zweitgenannten Ausführung des Steckverbinders 1, wie sie in den Fig. 1 und 6 dargestellt ist, vorgesehen sein, dass der Grundkörper 8 monolithisch einstückig ausgebildet und/oder in einem Spritzgussverfahren hergestellt ist.

In Fig. 6 ist eine konfektionierte Medienleitung, insbesondere Wasserstoffleitung, aufweisend einen Steckverbinder 1, welcher zumindest die Merkmale der zweitgenannten Ausführung des Steckverbinders 1 aufweist, dargestellt. Wie in Fig. 6 dargestellt, sieht es die konfektionierte Medienleitung vor, dass der Steckverbinder 1 derart mit der eine elektrisch leitfähige Innenschicht 6 aufweisenden Fluidleitung 4 verbunden ist, dass ein Leitungskanal 51 der Fluidleitung 4 fluidisch mit dem zweiten Anschlussende 12 verbunden ist.

Erfindungsgemäß ist bei der konfektionierten Medienleitung die Fluidleitung 4 mit einem Endabschnitt in die Anschlussrichtung A weisend unter radialelastischer Verformung des Kontaktarms 46 auf den Kontaktarm 46 bis zur Anlage an der Stirnseite 44 des Anschlusszapfens 42 aufgeschoben und mit dem Anschlusszapfen 42, insbesondere mittels der Montagehülse 50, verbunden. Diese erfindungsgemäße Ausführung ist in Fig. 6 dargestellt.

Vorteilhaft kann die konfektionierte Medienleitung durch die Merkmale der erstgenannten Ausführungsform des Steckverbinders 1 optimiert werden. Insbesondere kann die konfektionierte Medienleitung auch mittels der vorteilhaften Merkmale der erstgenannten und/oder der zweitgenannten Ausführungsform darüber hinaus verbessert werden. Insbesondere die in Fig. 6 dargestellte Variante der konfektionierten Medienleitung weist einen Steckverbinder auf, welcher sowohl die Merkmale der erstgenannten als auch der zweitgenannten Ausführung des Steckverbinders 1 aufweist.

Vorzugsweise ist vorgesehen, dass die Fluidleitung 4 eine äußere Trägerschicht 52 aus PA612 aufweist. Wie in Fig. 6 dargestellt, ist die Trägerschicht 52 vorzugsweise mit der Montagehülse 50 stoffschlüssig verbunden. Zur stoffschlüssigen Verbindung ist eine Verschweißung besonders geeignet.

Wie in Fig. 6 dargestellt, umgreift die Montagehülse 50, gemäß einer optionalen Variante der konfektionierten Medienleitung, sowohl den Montageabschnitt 48 des Anschlusszapfens 42 als auch den Endabschnitt der Fluidleitung 4 vollumfänglich. Die Montagehülse 50 ist dabei vorteilhaft stoffschlüssig mit dem Montageabschnitt 48 und der Fluidleitung 4 verbunden.

Exemplarisch ist in Fig. 6 eine bevorzugte Ausführungsform der konfektionierten Medienleitung dargestellt, gemäß welcher der Anschlusszapfen 42 zumindest im Montageabschnitt 48 einen Außendurchmesser aufweist, welcher dem Außendurchmesser der Fluidleitung 4 entspricht.

Vorzugsweise weist die Fluidleitung 4 eine die elektrisch leitfähige Innenschicht 6 umgebende Sperrschicht 54 auf. Die Sperrschicht 54 ist vorzugsweise als eine gegenüber Wasserstoff undurchlässige und/oder resistente Sperrschicht 54 ausgebildet. Alternativ oder ergänzend kann die Sperrschicht 54 auch als eine elektrisch isolierende Sperrschicht 54 ausgebildet sein. Diese Ausführung ist in Fig. 6 dargestellt.

Weiterhin kann die Fluidleitung 4 derart ausgebildet sein, dass die Sperrschicht 54 von der äußeren Trägerschicht 52 der Fluidleitung 4 umgeben ist. In dem in Fig. 6 dargestellten Ausführungsbeispiel ergibt sich dadurch ein besonders bevorzugter, zumindest dreilagiger, Aufbau der Fluidleitung 4, aufweisend eine innere elektrisch leitfähige Innenschicht 6, welche den Leitungskanal 51 der Fluidleitung 4 bildet, eine äußere Trägerschicht 52, welche vorzugsweise mit der Montagehülse 50 stoffschlüssig verbindbar/verbunden ist und eine zwischen der Innenschicht 6 und der Trägerschicht 52 angeordnete Sperrschicht 54. Es kann vorgesehen sein, dass zwischen der Innenschicht 6 und der Sperrschicht 54 und/oder zwischen der Sperrschicht 54 und der Trägerschicht 52 eine Haftvermittlerschicht ausgebildet/angeordnet ist.

Für die elektrisch leitfähige Innenschicht 6 der Fluidleitung 4 hat sich als besonders bevorzugt herausgestellt, wenn die elektrisch leitfähige Innenschicht 6 zumindest teilweise mit Kohlenstoffnanoröhren ausgebildet ist.

Vorzugsweise sind bei einer Variante des Steckverbinders 1 mit zumindest zwei Kontaktarmen 46 die freien Enden der Kontaktarme 46, wie in den Fig. 1 bis 3 und 6 dargestellt, auf einer Kreisbahn angeordnet, so dass die freien Enden der Kontaktarme 46 die elektrisch leitfähige Innenschicht 6 der Fluidleitung 4 gleichmäßig elektrisch leitend kontaktieren. Die Kontaktierung kann vorteilhaft weiter optimiert werden, indem die Kreisbahn, auf welcher die freien Enden der Kontaktarme 46 angeordnet sind, ein Übermaß, beispielsweise von 20 %, zu dem Leitungskanal 51 der Fluidleitung 4, zumindest in dem Endabschnitt der Fluidleitung 4, aufweist.

Fig. 7 zeigt eine weitere Variante eines erfindungsgemäßen Steckverbinders 1. Genauso wie der Steckverbinder 1 gemäß den Figuren 1 und 6 weist der Steckverbinder 1 einen Grundkörper 8 mit zumindest einem ersten Anschlussende 10 und mit zumindest einem mit dem ersten Anschlussende 10 fluidisch verbundenen, zweiten Anschlussende 12 auf.

Das zweite Anschlussende 12 ist als rohrförmiger Anschlusszapfen 42 ausgebildet, mit an einer gegen eine Anschlussrichtung A weisenden Stirnseite 44 angeformten radialelastischen Kontaktarmen 46. Auf einer äußeren Umfangsfläche eines Montageabschnitts 48 des Anschlusszapfens 42 ist eine Montagehülse 50 vorgesehen. Zu den Merkmalen und bevorzugten Ausgestaltungen des Anschlusszapfens 42, der Stirnseite 44, der Kontaktarme 46, des Montageabschnitts 48 und der Montagehülse 50 sei auf die vorangehenden Ausführungen bezüglich der Fig. 1 bis 6 verwiesen.

In den Fig. 7 und 8 ist dargestellt, dass der Steckverbinder 1 an dem ersten Anschlussende 10 einen Muffenabschnitt 14 aufweist. In einen Aufnahmekanal des Muffenabschnitt 14 ist ein Klammerkäfig 16 einsteckbar, wobei eine Stecköffnung 17 des Klammerkäfigs 16 koaxial zu einem inneren Aufnahmekanal des Muffenabschnitts 14 angeordnet ist (siehe Fig. 7). In den Klammerkäfig 16 ist ein Lagerelement 18 eingesteckt, das axial zur Montagerichtung M lösbar gehalten ist. Ein elastisch aufweitbarer Haltearm 22 einer senkrecht zu der Montagerichtung M in den Klammerkäfig 16 eingesteckten Halteklammer 20 ragt in einem unverformten Ruhezustand in den Klammerkäfig 16 hinein. Der Klammerkäfig 16, das Lagerelement 18 und die Halteklammer 20 können gleich ausgeführt sein, wie vorangehend mit Bezug zu den Fig. 1 bis 6 dargelegt.

Erfindungsgemäß ist in einer Stecköffnung 17 des Muffenabschnitts 14 ein gegen die Montagerichtung M weisender Rohransatz 26 ausgebildet. Analog zu dem in den Fig. 1 bis 6 beschriebenen Steckverbinder 1 ist zwischen dem Rohransatz 26 und einer inneren Umfangsfläche der Stecköffnung 17 ein Aufnahmespalt 28 zur Aufnahme eines Gegensteckverbinders 2 ausgebildet. Ferner weist der Rohransatz 26 einen Fluidkanal 30 auf, der wiederum mit zumindest dem zweiten Anschlussende 12 des Grundkörpers 8 fluidisch verbunden ist. Der Rohransatz 26 ragt insbesondere gegen die Montagerichtung M aus dem Muffenabschnitt 14 heraus.

Der Rohransatz 26 weist einen Lagerabschnitt 32 und einen Dichtungsabschnitt 34 auf. Der Dichtungsabschnitt 34 weist insbesondere mindestens einen relativ zu einem Außendurchmesser des Lagerabschnitts 32 geringeren Außendurchmesser auf. Darüber hinaus schließt sich vorzugsweise der Lagerabschnitt 32 in Montagerichtung M dem Dichtungsabschnitt 34 an. Zur Verbesserung der Dichtungseigenschaften des Steckverbinders 1 hat es sich zudem als vorteilhaft herausgestellt, dass in dem Dichtungsabschnitt 34 auf einer radial zum Fluidkanal 30 nach außen weisenden Mantelfläche ein Dichtungspaket angeordnet ist. Das Dichtungspaket gemäß der Ausführungsform aus Fig. 7 umfasst zwei Dichtungen 38.

Gemäß einer vorteilhaften Ausgestaltung des Steckverbinders aus Fig. 7 und 8 weist der Dichtungsabschnitt 34 eine erste Stufe 34a, eine zweite Stufe 34b und eine dritte Stufe 34c auf. Vorzugsweise schließt sich die erste Stufe 34a des Dichtungsabschnitts 34 an den Lagerabschnitt 32 an. Mit anderen Worten ist die erste Stufe 34a benachbart zu dem Dichtungsabschnitt 34 ausgebildet. Ein Außendurchmesser der dritten Stufe 34c ist relativ zu einem Außendurchmesser der zweiten Stufen 34b geringer. Der Außendurchmesser der zweiten Stufe 34b ist relativ zu einem Außendurchmesser der ersten Stufe 34a geringer. Der Außendurchmesser der ersten Stufe 34a ist relativ zu einem Außendurchmesser des Lagerabschnitts 32 geringer.

Eine erste Dichtung, nämlich eine erste Umfangsdichtung 38a, ist insbesondere auf einer nach außen weisenden Mantelfläche der ersten Stufe 34a angeordnet. Vorzugsweise liegt die erste Umfangsdichtung 38a an einem Anschlag 56 (siehe Fig. 8) an einem Übergang zwischen dem Lagerabschnitt 32 und der ersten Stufe 34a an. Eine zweite Dichtung, nämlich eine zweite Umfangsdichtung 38b, ist insbesondere auf einer nach außen weisenden Mantelfläche der zweiten Stufe 34b angeordnet.

Gemäß einer vorteilhaften Ausgestaltung ist vorgesehen, dass zumindest teilweise auf dem Dichtungsabschnitt 34 auf der dem Lagerabschnitt 32 gegenüberliegenden Seite des Dichtpakets ein ringförmiges Halteelement 36 angeordnet ist. Das in Fig. 7 dargestellte Halteelement 36 kann im Wesentlichen dieselben Merkmale aufweisen wie die Halteelemente 36 der in den Figuren 1 und 6 dargestellten Ausführungsformen. Es hat sich als besonders geeignet herausgestellt, dass das ringförmige Halteelement 36 mit dem Rohransatz 26 verklebt oder, beispielsweise unter Verwendung eines Laserschweißverfahrens, verschweißt wird. Eine alternative Variante sieht vor, dass das Halteelement 36 mit dem Rohransatz 26 verrastet oder auf dem Rohransatz 26 gepresst angeordnet ist.

Insbesondere ist vorgesehen, dass das Halteelement 36 auf einer Stufe, beispielsweise einer dritten Stufe 34c, des Dichtungsabschnitts 34 angeordnet ist. Um ein zu tiefes Anbringen des Halteelements 36 auf dem Dichtungsabschnitt 34, insbesondere der dritten Stufe 34c, zu verhindern, weist der Dichtungsabschnitt 34 einen Halteelementanschlag 58 auf. An dem Halteelementanschlag 58 liegt in einem verbauten Zustand das Halteelement 36 an.

Wie in Fig. 7 dargestellt, kann das Halteelement 36 zumindest einen Halteelementkontaktarm 60 aufweisen. Insbesondere kann der Halteelementkontaktarm 60 radialelastisch ausgebildet sein. Bevorzugt ist vorgesehen, dass der Halteelementkontaktarm 60 aus einem elektrisch leitenden Material hergestellt ist und, vorzugsweise materialeinheitlich, bevorzugt einstückig, mit dem Halteelement 36 ausgebildet ist. So kann der Halteelementkontaktarm 60 eine elektrische Verbindung zwischen einem Inneren eines Gegensteckverbinders 2 und dem Steckverbinder 1 herstellen. Im vorliegenden Ausführungsbeispiel der Fig. 7 weist das Halteelement 36 eine Mehrzahl von Halteelementkontaktarmen 60 auf, wobei alle Halteelementkontaktarme 60 gleich ausgebildet sind.

Ähnlich wie in den Fig. 1 und 6 weist auch der Steckverbinder 1 gemäß Fig. 7 einen Abstandshalter 40 auf, nämlich einen zwischen den Umfangsdichtungen 38a und 38b angeordneten und den Dichtungsabschnitt 34 umfangsmäßig umgreifenden Abstandshalter 40.

Vorteilhafterweise ist vorgesehen, dass der Abstandshalter 40 einen ersten Anlageabschnitt 40a und einen zweiten Anlageabschnitt 40b aufweist. Es ist insbesondere vorgesehen, dass der Abstandshalter 40 mit einem Anschlagabschnitt 40c, vorzugsweise einem Anschlagabschnitt 40c des zweiten Anlageabschnitts 40b, an einem Abstandshalteranschlag 62 des Dichtungsabschnitts 34 (siehe Fig. 8) anliegt. Durch eine derartige Wechselwirkung zwischen dem Anschlagabschnitt 40c und dem Abstandshalteranschlag 62 kann ein Abstand zwischen dem Abstandshalter 40 und dem Lagerabschnitt 32 in Montagerichtung M eingestellt werden. Die erste Umfangsdichtung 38a kann so gewählt sein, dass ihre axiale Erstreckung kleiner oder gleich dem Abstand zwischen dem Abstandshalter 40 und dem Lagerabschnitt 32 ist. Hierdurch kann eine Kompression der ersten Umfangsdichtung 38a vermieden werden.

Insbesondere ist ein Innendurchmesser des ersten Anlageabschnitts 40a relativ größer als ein Innendurchmesser des zweiten Anlageabschnitts 40b. Vorzugsweise liegt der Abstandshalter 40 mit dem ersten Anlageabschnitt 40a zumindest teilweise an der ersten Stufe 34a des Dichtungsabschnitts 34 und/oder mit dem zweiten Anlageabschnitt 34b zumindest teilweise an der zweiten Stufe 34b des Dichtungsabschnitts 34 an. Es ist somit bevorzugt vorgesehen, dass sich der Abstandshalter 40 in Montagerichtung M über den Abstandshalteranschlag 62 erstreckt. Ferner kann eine Erstreckung des ersten Anlageabschnitts 40a in Montagerichtung M größer sein als eine Erstreckung des zweiten Anlageabschnitts 40b in Montagerichtung M.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die in den Ansprüchen 1, 4 und/oder 12 definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des jeweiligen Anspruchs 1, 4 und/oder 12 weggelassen beziehungsweise durch mindestens ein an anderer Stelle der Anmeldung offenbartes Einzelmerkmal ersetzt werden kann.

### Bezugszeichenliste

- 1: Steckverbinder
- 2: Gegensteckverbinder
- 4: Fluidleitung
- 6: Innenschicht
- 8: Grundkörper
- 10: Erstes Anschlussende
- 12: Zweites Anschlussende
- 14: Muffenabschnitt
- 16: Klammerkäfig
- 17: Stecköffnung
- 18: Lagerelement
- 20: Halteklammer
- 22: Haltearm
- 24: Haltenut
- 26: Rohransatz
- 28: Aufnahmespalt
- 30: Fluidkanal
- 32: Lagerabschnitt
- 34: Dichtungsabschnitt
- 34a: erste Stufe
- 34b: zweite Stufe
- 34c: dritte Stufe
- 36: Halteelement
- 38: Umfangsdichtung
- 38a: erste Umfangsdichtung
- 38b: zweite Umfangsdichtung
- 40: Abstandshalter
- 40a: erster Anlageabschnitt
- 40b: zweiter Anlageabschnitt
- 40c: Anschlagabschnitt
- 42: Anschlusszapfen
- 44: Stirnseite
- 46: Kontaktarm
- 48: Montageabschnitt
- 50: Montagehülse
- 51: Leitungskanal
- 52: Trägerschicht
- 54: Sperrschicht
- 56: Anschlag
- 58: Halteelementanschlag
- 60: Halteelementkontaktarm
- 62: Abstandshalteranschlag

- M: Montagerichtung
- A: Anschlussrichtung

## Patentansprüche

1. Steckverbinder (1), insbesondere für ein Wasserstoffleitungssystem mit zumindest einer eine elektrisch leitfähige Innenschicht (6) aufweisenden Fluidleitung (4), aufweisend einen Grundkörper (8) mit zumindest einem ersten Anschlussende (10) und zumindest einem fluidisch mit dem ersten Anschlussende (10) verbundenen zweiten Anschlussende (12),
**dadurch gekennzeichnet, dass**
das zweite Anschlussende (12) des Grundkörpers (8) als rohrförmiger Anschlusszapfen (42) ausgebildet ist, wobei der Anschlusszapfen (42) an einer gegen eine Anschlussrichtung (A) weisenden Stirnseite (44) zumindest einen radialelastischen Kontaktarm (46) angeformt hat, welcher sich derart gegen die Anschlussrichtung (A) weisend zu einem freien Ende erstreckt, und dass die Fluidleitung (4) in die Anschlussrichtung (A) weisend unter radialelastischer Verformung des Kontaktarms (46) auf den Kontaktarm (46) bis zur Anlage an der Stirnseite (44) des Anschlusszapfens (42) aufgeschoben und mit dem Anschlusszapfen (42) verbunden werden kann, wobei mittels des Kontaktarms (46) eine elektrische Spannung aus der elektrisch leitfähigen Innenschicht (6) der Fluidleitung (4) ableitbar ist.

2. Steckverbinder (1) nach Anspruch 1,
**dadurch gekennzeichnet, dass**
die Anschlusszapfen (42) auf einer äußeren Umfangsfläche einen Montageabschnitt (48) zur stoffschlüssigen Verbindung mit einer Montagehülse (50) aufweist,
insbesondere dass der Montageabschnitt (48) als ein Schweißabschnitt (48) zum Verschweißen mit einer als Schweißbuchse (50) ausgebildeten Montagehülse (50) ausgebildet ist.

3. Steckverbinder (1) nach Anspruch 1 oder 2,
**dadurch gekennzeichnet, dass**
an die Stirnseite (44) der Anschlusszapfen (42) zumindest zwei, bevorzugt zumindest vier, insbesondere zumindest sechs, vorzugsweise acht Kontaktarme (46) umfangsgemäß gleichmäßig an der Stirnseite (44) angeformt sind.

4. Steckverbinder (1) nach dem Oberbegriff des Anspruchs 1, wobei das erste Anschlussende (10) einen Muffenabschnitt (14) mit einem inneren Aufnahmekanal aufweist, wobei in eine Montagerichtung (M) weisend in den Aufnahmekanal des Muffenabschnitts (14) ein Klammerkäfig (16) einsteckbar und formschlüssig mittels eines Lagerelementes (18) axial zur Montagerichtung (M) lösbar gehalten ist, wobei eine Stecköffnung (17) des Klammerkäfigs (16) koaxial zum Aufnahmekanal angeordnet ist, wobei radial zur Stecköffnung (17) elastisch aufweitbare Haltearme (22) einer senkrecht zur Montagerichtung (M) in den Klammerkäfig (16) einsteckbaren Halteklammer (20) in einem unverformten Ruhezustand in die Stecköffnung (17) des Klammerkäfigs (16) hineinragen,
**dadurch gekennzeichnet, dass**
in der Stecköffnung (17) des Muffenabschnitts (14) ein gegen die Montagerichtung (M) weisender Rohransatz (26) des Grundkörpers (8) derart ausgebildet ist, dass zwischen dem Rohransatz (26) und einer inneren Umfangsfläche der Stecköffnung (17) ein Aufnahmespalt (28) zur Aufnahme eines Gegensteckverbinders (2) ausgebildet ist und der Rohransatz (26) einen Fluidkanal (30) aufweist, welcher fluidisch mit zumindest dem zweiten Anschlussende (12) des Grundkörpers (8) verbunden ist.

5. Steckverbinder (1) nach Anspruch 4,
**dadurch gekennzeichnet, dass**
der Rohransatz (26) gegen die Montagerichtung (M) weisend aus dem Muffenabschnitt (14) herausragt.

6. Steckverbinder (1) nach Anspruch 4 oder 5,
**dadurch gekennzeichnet, dass**
der Rohransatz (26) einen Lagerabschnitt (32) und einen Dichtungsabschnitt (34) aufweist, wobei der Dichtungsabschnitt (34) relativ zum Lagerabschnitt (32) einen geringeren Außendurchmesser aufweist, wobei sich der Lagerabschnitt (32) in Montagerichtung (M) weisend dem Dichtungsabschnitt (34) anschließt, und in dem Dichtungsabschnitt (34) auf einer radial zum Fluidkanal (30) nach außen weisenden Mantelfläche ein Dichtungspaket angeordnet ist, insbesondere dass sich der Dichtungsabschnitt (34) bis zu einem gegen die Montagerichtung (M) weisenden freien Ende des Rohransatzes (26) erstreckt.

7. Steckverbinder (1) nach Anspruch 6,
**dadurch gekennzeichnet, dass**
zumindest teilweise auf dem Dichtungsabschnitt (34) auf der dem Lagerabschnitt (32) gegenüberliegenden Seite des Dichtungspakets ein ringförmiges Halteelement (36) angeordnet ist.

8. Steckverbinder (1) nach Anspruch 7,
**dadurch gekennzeichnet, dass**
das ringförmige Halteelement (36) stoffschlüssig mit dem Rohransatz (26) verbunden, insbesondere verschweißt oder verklebt, ist, und/oder dass das ringförmige Halteelement (36) kappenartig ausgebildet ist und an einer gegen die Montagerichtung (M) weisenden Frontseite des freien Endes des Rohransatzes (26) und der Mantelfläche des Dichtungsabschnitts anliegend angeordnet ist, und/oder dass das ringförmige Halteelement (36) aus einem elektrisch leitfähigen Material, insbesondere einem elektrisch leitfähigen Kunststoff ausgebildet ist, insbesondere dass das ringförmige Halteelement (36) aus einem elektrisch leitfähigen, mit Kohlefasern verstärkten Kunststoff, insbesondere mit einem Kohlefaseranteil von 20 %, ausgebildet ist.

9. Steckverbinder (1) nach einem der Ansprüche 6 bis 8,
**dadurch gekennzeichnet, dass**
das Dichtungspaket zwei den Dichtungsabschnitt (34) umfangsgemäß umgreifende Umfangsdichtungen (38), insbesondere O-Ringe, und einen zwischen den Umfangsdichtungen (38) angeordneten und den Dichtungsabschnitt (34) umfangsgemäß umgreifenden Abstandshalter (40) aufweist.

10. Steckverbinder (1) nach einem der vorausgehenden Ansprüche,
**dadurch gekennzeichnet, dass**
der Grundkörper (8) aus einem elektrisch leitfähigen Material, insbesondere einem elektrisch leitfähigen Kunststoff, besonders bevorzugt einem mit Kohlefasern verstärkten Kunststoff mit insbesondere einem Kohlefaseranteil von 20 %, ausgebildet ist.

11. Steckverbinder (1) nach einem der Ansprüche 4 bis 10,
**dadurch gekennzeichnet, dass**
der Steckverbinder (1) die Merkmale von zumindest einem der Ansprüche 1 bis 3 aufweist.

12. Konfektionierte Medienleitung, insbesondere Wasserstoffleitung, aufweisend einen Steckverbinder (1) nach Anspruch 1, und eine derart mit dem Steckverbinder (1) verbundene, eine elektrisch leitfähige Innenschicht (6) aufweisende Fluidleitung (4), dass ein Leitungskanal (51) der Fluidleitung (4) fluidisch mit dem zweiten Anschlussende (12) verbunden ist,
**dadurch gekennzeichnet, dass**
die Fluidleitung (4) mit einem Endabschnitt in die Anschlussrichtung (A) weisend unter radialelastischer Verformung des zumindest einen Kontaktarms (46) auf den Kontaktarm (46) bis zur Anlage an der Stirnseite (44) des Anschlusszapfens (42) aufgeschoben und mit dem Anschlusszapfen (42) verbunden ist.

13. Konfektionierte Medienleitung nach Anspruch 12,
**dadurch gekennzeichnet, dass**
der Steckverbinder (1) die Merkmale von zumindest einem der Ansprüche 4 bis 10 aufweist, und/oder dass die Fluidleitung (4) eine äußere Trägerschicht (52) aus PA612 aufweist.

14. Konfektionierte Medienleitung nach Anspruch 12 oder 13,
**dadurch gekennzeichnet, dass**
der Steckverbinder (1) die Merkmale des Anspruchs 2 aufweist, wobei die Montagehülse (50) sowohl den Montageabschnitt (48) des Anschlusszapfens (42) als auch den Endabschnitt der Fluidleitung (4) vollumfänglich umgreift und stoffschlüssig mit dem Montageabschnitt (48) und der Fluidleitung (4), insbesondere der äußeren Trägerschicht (52) der Fluidleitung (4), verbunden, insbesondere verschweißt, ist, insbesondere dass die Anschlusszapfen (42) zumindest im Montageabschnitt (48) einen Außendurchmesser aufweist, welcher dem Außendurchmesser der Fluidleitung (4) entspricht.

15. Konfektionierte Medienleitung nach einem der Ansprüche 12 bis 14,
**dadurch gekennzeichnet, dass**
die Fluidleitung (4) eine die elektrisch leitfähige Innenschicht (6) umgebende, gegenüber Wasserstoff undurchlässige und/oder gegenüber Wasserstoff resistente und/oder elektrisch isolierende Sperrschicht (54) aufweist, wobei die Sperrschicht (54) insbesondere von der äußeren Trägerschicht (52) der Fluidleitung (4) umgeben ist, und/oder, dass die elektrisch leitfähige Innenschicht (6) der Fluidleitung (4) zumindest teilweise mit Kohlenstoffnanoröhren ausgebildet ist.

16. Konfektionierte Medienleitung nach einem der Ansprüche 12 bis 15,
**dadurch gekennzeichnet, dass**
der Steckverbinder (1) die Merkmale des Anspruch 4 aufweist, und die freien Enden der Kontaktarme (46) auf einer Kreisbahn angeordnet sind, wobei diese Kreisbahn ein Übermaß zu dem Leitungskanal (51) der Fluidleitung (4), zumindest in dem Endabschnitt der Fluidleitung (4), aufweist, insbesondere dass die Kreisbahn ein Übermaß von 20 % zu dem Leitungskanal (51) der Fluidleitung (4), zumindest in dem Endabschnitt der Fluidleitung (4), aufweist.
